# EUROPÄISCHE PATENTSCHRIFT

(11) **EP 2 157 334 B1**
(45) Veröffentlichungstag und Bekanntmachung des Hinweises auf die Patenterteilung: **09.10.2013**
(21) Anmeldenummer: 09164713.1
(22) Anmeldetag: 07.07.2009
(51) Int. Cl.: F16G 1/28, F16H 19/00

(54) **Vorrichtung zum linearen Bewegen eines Schlittens**
Device for linear movement of a slide
Dispositif destiné au mouvement linéaire d'un chariot

(30) Priorität: 14.07.2008 EP 08160346
(43) Veröffentlichungstag der Anmeldung: 24.02.2010
(73) Patentinhaber: Komax Holding AG, 6036 Dierikon (CH)
(72) Erfinder: Flury, Peter, 6222 Gunzwil (CH); Peter, Christoph, 6004 Luzern (CH); Staubli, Dominik, 6048 Horw (CH); Viviroli, Stefan, 6048 Horw (CH)
(74) Vertreter: Blöchle, Hans

(56) Entgegenhaltungen:
- EP-A- 1 344 959
- EP-A- 1 522 377
- WO-A-2006/076887
- WO-A1-2004/099055
- DE-U1-202006 018 238
- US-A1- 2004 026 177
- US-A1- 2008 087 502

## Beschreibung

### Technisches Gebiet

Die Erfindung betrifft eine Vorrichtung zum linearen Bewegen eines Schlittens.

Diese Vorrichtung, die im Folgenden auch als Linearachse oder Linearführung mit Antrieb bezeichnet wird, ermöglicht eine reibungsarme Translation einer oder mehrerer Baugruppen einer Maschine entlang einer linearen Bahn. Die Linearachse umfasst dazu einen Schlitten, auf dem die Baugruppe angeordnet ist, und der entlang dieser linearen Bahn bewegt werden kann.

### Stand der Technik

Bei einer möglichen Ausführungsform der Linearachse wird der Schlitten mittels eines motorisch angetriebenen Zahnriemens bewegt. Falls mit dem Schlitten Sensoren und elektrische Verbraucher mitbewegt werden sollen, ergibt sich ein grosser Aufwand für die sichere Führung der mit dem Schlitten mitbewegten Kabel. Oftmals müssen die Kabel in Schleppketten eingelegt werden, was die Linearachse mit zusätzlicher Masse und Reibung belastet. Diese Ausführungsform hat zudem den Nachteil, dass die Schleppketten und Kabel einem hohen Verschleiss ausgesetzt sind und dadurch eine nur eingeschränkte Lebensdauer aufweisen.

US 2004/0026177 A1 entspricht dem nächstkommenden Stand der Technik gemäß dem Oberbegriff des Anspruchs 1 und beschreibt eine Aufzugsanlage mit einer vertikal bewegbaren Aufzugskabine, die eine Kabinensteuerungseinheit und damit verbundene erste Kopplungsmittel aufweist; einem Antriebsmotor mit einem Antriebsrad, einer Motorsteuerungseinheit und damit verbundene zweite Kopplungsmitteln; und drei im wesentlichen parallel geführten Seilen, die an ihren beiden äußeren an zwei an einer Deckenstruktur angeordneten Seilankerpunkten an der Deckenstruktur befestigt sind und die über zwei ebenfalls an der Deckenstruktur befestigte Rollen, das Antriebsrad des Antriebsmotors und zwei an einem Gegengewicht angebrachten Rollen laufen. Die Fahrstuhlkabine ist vermittels zweier an ihrer Unterseite angebrachten Rollen in das zwischen einem der Seilankerpunkte und einer an der Deckenstruktur befestigten Rollen eingehängt. Die Seile umfassen jeweils eine Vielzahl von Strängen, die jeweils aus einer Vielzahl von elektrisch leitfähigen Drähten ausgebildet sind, und ein harzhaltiges Isoliermaterial, das die Stränge umgibt und gegeneinander und nach außen hin elektrisch isoliert. Die ersten und zweiten Kopplungsmittel umfassen jeweils im Querschnittsprofil C-förmige Magnetkerne aus Metall, und eine Spule aus Leitungsdraht, die den Magnetkern in mehreren Windungen umgibt. Die Kopplungsmittel können jeweils als Sender und als Empfänger betrieben werden und ermöglichen eine kontaktlose Signalübertragung durch die Stränge des Seils vom ersten zum zweiten Kopplungsmittel oder umgekehrt. Die Stränge des Seils sind bei den Seilankerpunkten elektrisch miteinander verbunden, sodass durch die Stränge eine geschlossene elektrische Schleife für die Signalübertragung ausgebildet ist.

### Darstellung der Erfindung

Ausgehend von diesem Stand der Technik ist es eine Aufgabe der Erfindung, eine Vorrichtung zum linearen Bewegen eines Schlittens anzugeben, die ohne Schleppkabel auskommt und bei der trotzdem die Energie zu einer mit dem Schlitten der Linerachse bewegten Schaltung übertragen werden kann.

Diese Aufgabe wird mit einer Vorrichtung zum linearen Bewegen eines Schlittens mit den Merkmalen gemäss Patentanspruch 1 gelöst.

So umfasst die erfindungsgemässe Vorrichtung zum linearen Bewegen eines Schlittens einen Riemen mit einem elektrischen Leiter und einen beweglichen Schlitten sowie eine mit dem Schlitten bewegliche Schaltung, die mit dem Leiter elektrisch verbunden ist. Zudem sind eine ortsfeste Schaltung und ein Mittel zur induktiven Kopplung vorgesehen, um von der ortsfesten Schaltung elektrische Energie induktiv in den Leiter einzukoppeln.

Erfindungsgemäß sind die Enden des Riemens und/oder des Leiters am Schlitten festgeklemmt. Auf diese Weise kann das elektrische Signal beziehungsweise die elektrische Spannung, die am Riemen anliegt, einfach abgegriffen werden.

Vorteilhafte Weiterbildungen der Erfindung ergeben sich aus den in den abhängigen Patentansprüchen angegebenen Merkmalen.

Bei einer Ausführungsform der erfindungsgemässen Vorrichtung ist der Riemen zumindest partiell als Zahnriemen ausgebildet. Dies hat den Vorteil, dass die Zähne des Riemens zum Spannen des Riemens verwendet werden können. Zudem bilden die Zähne des Riemens in dem Bereich, in dem sie mit der Halterung des Schlittens verbunden sind, einen Formschluss.

Bei einer weiteren Ausführungsform der erfindungsgemässen Vorrichtung weist der Riemen Zugstränge auf, die als elektrische Leiter dienen. Auf diese Weise vereinen die Zugstränge mehrere Funktionen in sich.

Bei einer Weiterbildung der erfindungsgemässen Vorrichtung sind am Schlitten Kontaktelemente vorgesehen, mit denen die Enden des Leiters elektrisch verbunden sind.

Zur Lösung der Aufgabe wird ferner vorgeschlagen, dass bei der Vorrichtung das Mittel zur induktiven Kopplung einen magnetisch leitenden Ringkern mit mindestens einer Wicklung umfasst, wobei der Riemen durch den Ringkern hindurch läuft.

Darüber hinaus kann bei der erfindungsgemässen Vorrichtung die ortsfeste Schaltung derart ausgebildet und betreibbar sein, dass sie in der Wicklung einen modulierten Wechselstrom erzeugt.

Nach einem weiteren Merkmal der Erfindung kann diese noch weiter verbessert werden, indem bei der Vorrichtung die ortsfeste Schaltung derart ausgebildet und betreibbar ist, dass mit ihr die verbrauchte Leistung gemessen und ausgewertet wird.

Bei einer Weiterbildung der erfindungsgemässen Vorrichtung sind am Schlitten ein oder mehrere Kabelgreifer angeordnet.

Zudem kann beim Riemen der Vorrichtung ein Teil der elektrischen Leiter Kupfer enthalten. Dadurch wird die Leitfähigkeit im Riemen optimiert.

Die erfindungsgemässe Vorrichtung kann darüber hinaus ein weiteres Mittel zur induktiven Kopplung aufweisen, das auf dem Schlitten angeordnet ist. Dies hat den Vorteil, dass die Erfindung auch dann verwendet werden kann, wenn der Riemen ein Endlosriemen ist und die Leiter im Riemen nicht direkt zugänglich sind.

Schliesslich kann die erfindungsgemässe Vorrichtung zum Bearbeiten von Kabeln verwendet werden. Die Linearachse ist insbesondere zum Einziehen und Strecken von Kabeln geeignet.

### Kurze Beschreibung der Zeichnungen

Im Folgenden wird die Erfindung mit mehreren Ausführungsbeispielen anhand mehrerer Figuren weiter erläutert.
- Figur 1: zeigt die Linearachse in perspektivischer Ansicht.
- Figur 2: zeigt einen Ausschnitt des Zahnriemens in perspektivischer Ansicht.
- Figur 3: zeigt die Klemmvorrichtung in perspektivischer Ansicht mit teilweise ausgebrochenen Teilen.
- Figur 4: zeigt ein Blockschema.
- Figur 5: zeigt das elektrische Ersatzschaltbild, für den Fall, dass die Zugstränge parallel geschaltet sind.
- Figur 6: zeigt das elektrische Ersatzschaltbild, für den Fall, dass die Zugstränge in Reihe geschaltet sind.
- Figur 7: zeigt den Spannungsverlauf im Normalzustand ohne Kommunikation.
- Figur 8: zeigt den Spannungsverlauf bei einer Datenübertragung von der ortsfesten Schaltung zur Schaltung auf dem Schlitten.
- Figur 9: zeigt den Spannungsverlauf bei einer Datenübertragung von der Schaltung auf dem Schlitten zur ortsfesten Schaltung.

### Wege zur Ausführung der Erfindung

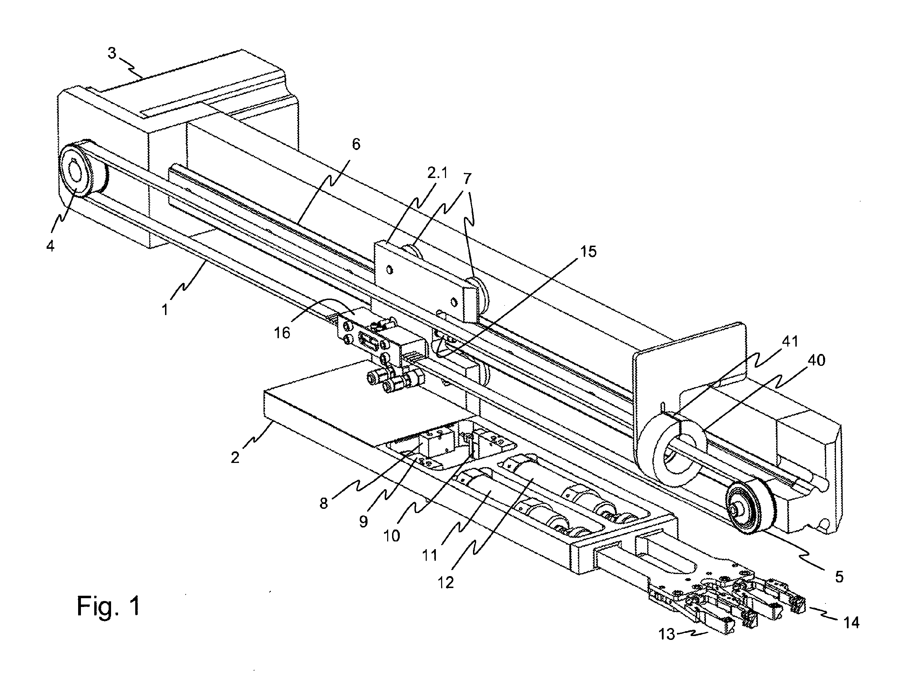

Im Folgenden wird eine Ausführungsform der Erfindung unter Bezugnahme auf die Figuren 1 bis 4 näher beschrieben. In Figur 1 ist eine mögliche Ausführungsform der erfindungsgemässen Linearachse in einer perspektivischen Ansicht dargestellt. Die Linearachse umfasst einen Riemen 1 mit mehreren Zugsträngen 1.2, die zugleich als elektrischer Leiter 1.2 dienen. Der Riemen 1 wird mittels eines elektrischen Antriebs 3 angetrieben und durch zwei Umlenkrollen 4 und 5 geführt. Die Umlenkrollen 4 und 5 werden im Folgenden auch als Riemenscheiben bezeichnet. Zudem ist eine mechanische Führung 6 vorgesehen, die den Schlitten 2 auf einer linearen Bahn führt. Der Schlitten 2 ist dazu über Führungsrollen 7, die mit der Schlittenhalterung 2.1 verbunden sind, auf der Führung 6 beweglich gelagert. Der Schlitten 2 trägt an seinem einen Ende einen ersten Kabelgreifer 13, der über einen ersten Pneumatikzylinder 11 angetrieben wird. Die Steuerung des ersten Pneumatikzylinders 11 erfolgt über ein erstes Magnetventil 9, das ebenfalls auf dem Schlitten 2 montiert ist. Zudem trägt der Schlitten 2 am selben Ende einen zweiten Kabelgreifer 14, der über einen zweiten Pneumatikzylinder 12 angetrieben wird. Die Steuerung des zweiten Pneumatikzylinders 12 erfolgt über ein zweites Magnetventil 10. Die Versorgung der beiden Pneumatikzylinder 11 und 12 mit Druckluft erfolgt über einen Druckluftanschluss 15, der sich an der Schlittenhalterung 2.1 befindet. Die Linearführung trägt zusätzlich einen Ringkern 40, durch den der Riemen 1, vorzugsweise berührungslos, hindurch geführt wird.

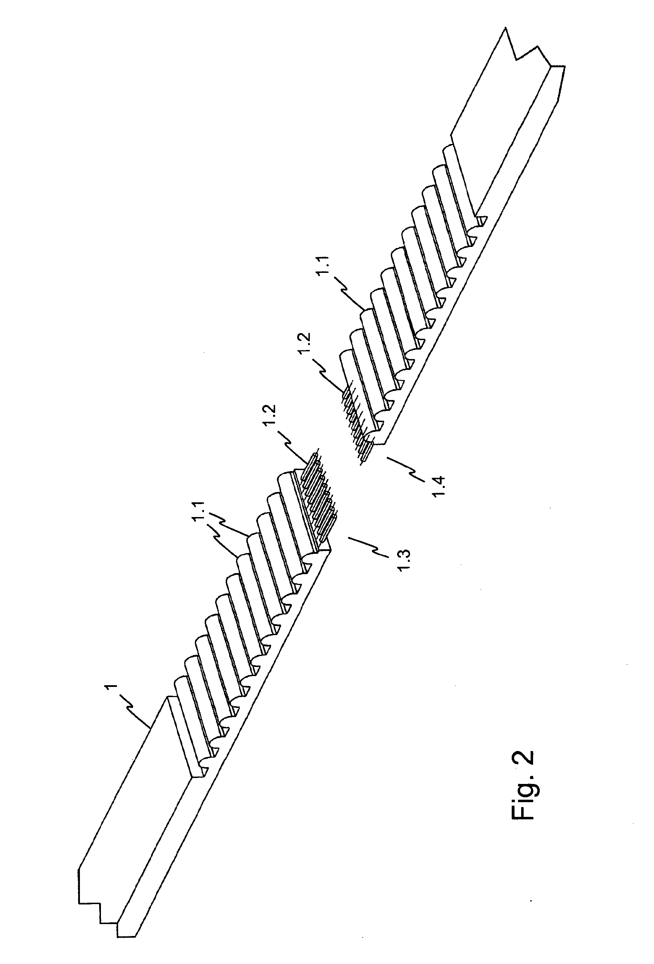

In Figur 2 ist eine mögliche Ausführungsform des Riemens 1 in einer dreidimensionalen Ansicht gezeigt. In dieser Ausführungsform ist der Riemen 1 kein Endlosriemen, sondern hat ein erstes Ende 1.3 und ein zweites Ende 1.4. Zudem weist der Riemen 1 in den Endbereichen Zähne 1.1 auf. Im Riemen sind Zugstränge 1.2 vorgesehen, die gleichzeitig als elektrische Leiter dienen.

Statt dessen kann der Riemen 1 aber auch einen oder mehrere Zugstränge und zusätzlich dazu einen oder mehrere elektrische Leiter aufweisen. Die Zugstränge können beispielsweise Kunstfaserstränge sein. Als elektrische Leiter können bei dieser Variante beispielsweise Kupferleiter verwendet werden.

Der Riemen 1 kann beispielsweise auch als Flachriemen, Längsrippenriemen oder Keilriemen ausgebildet sein.

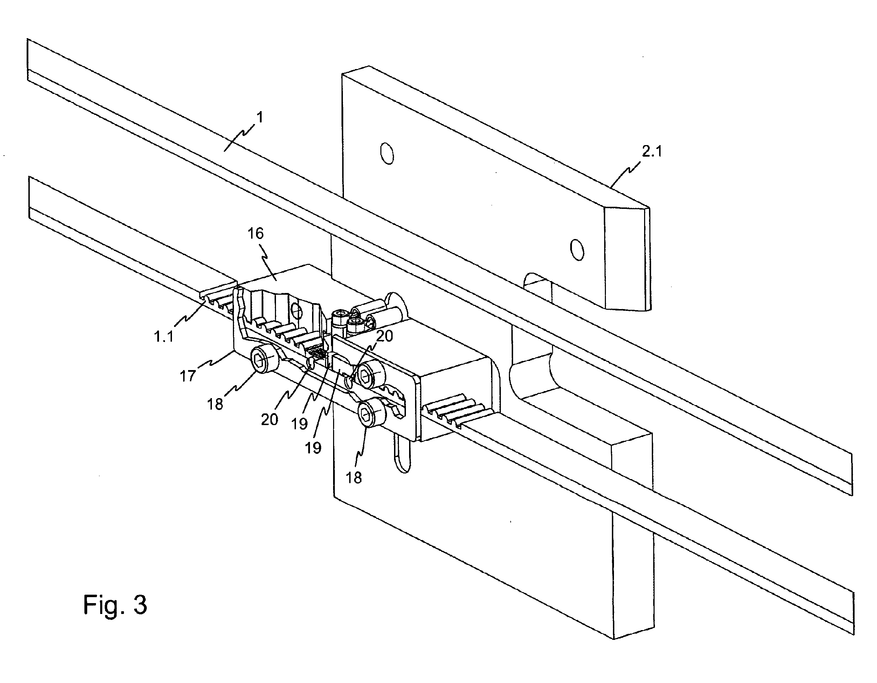

In Figur 3 ist die Einspannung des Riemens 1 an der Schlittenhalterung 2.1 als dreidimensionalen Detailansicht gezeigt. Ein Teil der Klemmung ist zum besseren Verständnis aufgebrochen dargestellt. Das erste Ende 1.3 des Riemens 1 wird von der einen Seite eines Klemmblocks 16 in diesen eingeführt und dort mittels mehrerer Schrauben 18 und einer Klemmplatte 17 festgeklemmt. Das zweite Ende 1.4 des Riemens 1 wird von der anderen Seite des Klemmblocks 16 in diesen eingeführt und dort ebenfalls mit den Schrauben 18 und der Klemmplatte 17 festgeklemmt. Der Klemmblock 16 besteht vorzugsweise aus Kunststoff.

Die Zugstränge 1.2 liegen auf Stiften 20 auf und werden mit den Kontaktstücken 19 eingeklemmt, so dass sie mit diesen elektrisch verbunden sind. An den Kontaktstücken 19 befinden sich die elektrischen Anschlüsse. Auf diese Weise ist eine am Riemen 1 anliegende Spannung U1 an den Kontaktstücken 19 abgreifbar.

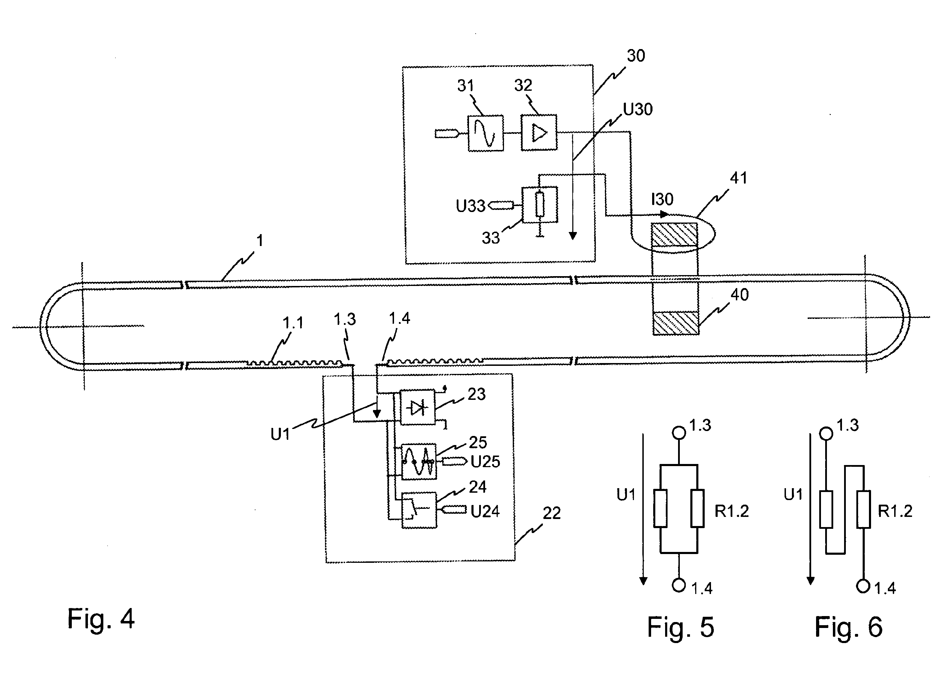

Wie in Figur 4 gezeigt, ist auf dem Schlitten 2 eine Schaltung 22 vorgesehen, die mit den Leitern 1.2 des Riemens 1 elektrisch verbunden ist. Zudem sind eine ortsfeste Schaltung 30 und ein Mittel zur induktiven Kopplung 40, 41 vorhanden, um von der ortsfesten Schaltung 30 elektrische Energie induktiv in den Leiter 1.2 einzukoppeln.

Der in den Figuren 1 bis 4 gezeigte Riemen 1 ist in den Figuren 1 bis 4 der Einfachheit halber lediglich an den Enden 1.3 und 1.4 mit Zähnen 1.1 dargestellt. Normalerweise weist der Riemen aber über die gesamte Länge Zähne 1.1 auf.

Die erfindungsgemässe Lösung hat den Vorteil, dass ein handelsüblicher Riemen, der als Antriebselement der Linearachse bereits vorhanden ist, für die Übertragung der elektrischen Energie verwendet werden kann. Die Zugstränge 1.2 sind vollständig im Kunststoffmaterial des Riemenkörpers eingebettet und somit genügend isoliert.

Die Vermeidung eines Schleppkabels ist besonders bei einer längeren Linearachse vorteilhaft. Der Riemen 1 ist dabei aufgrund seiner Länge in der Regel nicht als Endlos-Riemen ausgeführt, sondern ist auf die gewünschte Länge zugeschnitten und die beiden Enden 1.3 und 1.4 des Riemens 1 sind zur Übertragung der Zugkräfte auf dem Schlitten 2 festgeklemmt. Die Klemmung wird durch den mit den Zähnen 1.1 des Riemens 1 erreichbaren Formschluss vereinfacht. Es ist zweckmässig, die Enden 1.3 und 1.4 der Zugstränge 1.2 des Riemens 1 im Schlitten 2 direkt zu kontaktieren. Um das Kontaktieren zu erleichtern, kann das Kunststoffmaterial des Riemens 1 auf einer bestimmten Länge entfernt oder der Kunststoff erst gar nicht aufgebracht werden.

In der ortsfesten Schaltung 30 wird mittels eines Wechselstromgenerators 31 eine Wechselspannung erzeugt, mit einer Verstärkerendstufe 32 verstärkt und mit mindestens einer Windung 41 um den magnetischen Ringkern 40 geführt. Dadurch entsteht im Ringkern 40 ein magnetischer Fluss.

Da der Riemen 1 durch den Ringkern 40 läuft, wird eine Wechselspannung U1 in die Zugstränge 1.2 des Riemens 1 induziert. Diese Wechselspannung U1 kann in der bewegten Schaltung 22 auf dem Schlitten 2 an den Kontaktstellen 19 abgegriffen werden. Bei Bedarf kann die Wechselspannung U1 mit einem Gleichrichter 23 gleichgerichtet und zur Speisung von elektrischen Verbrauchern wie zum Beispiel den Magnetventilen 9 und 10 und Sensoren verwendet werden.

Normalerweise sind mehrere Zugstränge 1.2 parallel nebeneinander im Kunststoff eingelassen. Mit der Art der Kontaktierung der einzelnen Stränge 1.2 und der Anzahl Windungen am Ringkern, kann man das Verhältnis der angelegten Spannung am Ringkern 40 zur induzierten Spannung U1 am Riemen 1 bestimmen.

Werden zum Beispiel, wie in Figur 5 vereinfacht gezeigt, alle Zugstränge 1.2 parallel geschaltet und der Ringkern 40 mit einer einzigen Windung 41 umwunden, ist das Verhältnis der Primärwicklung zur Sekundärwicklung und damit das Verhältnis der Spannungen U30:U1 = 1:1. Diese Beschaltung ergibt den kleinsten elektrischen Innenwiderstand des Riemens 1. Der Innenwiderstand oder Gesamtwiderstand Rges des Riemens 1 ergibt sich bei der Parallelschaltung von N Zugsträngen 1.2 zu: Rges = R1.2/N, wobei R1.2 der Widerstand eines einzelnen Zugstrangs ist.

Werden hingegen zwei Zugstränge 1.2 seriell verbunden, wie dies in Figur 6 gezeigt ist, und der Ringkern 40 mit einer einzigen Windung umwunden, ist das Verhältnis der Primärwicklung zur Sekundärwicklung und damit das Verhältnis der Spannungen U30:U1 = 1:2. Der elektrische Innenwiderstand des Riemens 1 hat sich in diesem Fall gegenüber dem in Figur 5 beschriebenen Fall jedoch vervierfacht. Der Innenwiderstand Rges des Riemens 1 ergibt sich bei der Reihenschaltung von N Zugsträngen 1.2 zu: Rges = N * R1.2. Um die einzelnen Zugstränge 1.2 in Reihe zu schalten, kann eine leitende Brücke zwischen den Enden der Zugstränge vorgesehen sein, die jeweils das eine Ende eines Zugstrangs mit dem gegenüber liegenden anderen Ende eines weiteren Zugstrangs verbindet.

Gewöhnlich bestehen die Zugstränge 1.2 aus Stahl. Um die elektrische Leitfähigkeit weiter zu erhöhen, können im Kunststoff des Riemens 1 auch zusätzliche Stränge aus Kupfer eingelassen sein.

Der Leistungsbereich ist abhängig von den magnetischen Eigenschaften des Ringkerns 40, der Amplitude und Frequenz der angelegten Spannung U30 sowie vom Innenwiderstand des Riemens 1. In der Regel wird der Leistungsbedarf unter 500 Watt liegen.

Falls in einer beispielhaften und nicht zur Erfindung gehörenden Ausführungsform der Riemen 1 geschlossen und die Zugstränge 1.2 nicht unterbrochen sein sollen, kann man einen zweiten magnetisch leitenden Ringkern nutzen, der in den Figuren allerdings nicht gezeigt ist. Dieser zweite Ringkern wird auf dem bewegten Schlitten 2 montiert, so dass der Riemen 1 auch durch den zweiten Ringkern verläuft. Aufgrund der kurzgeschlossenen Zugstränge 1.2 erzeugt die induzierte Wechselspannung einen Strom im Riemen 1, welcher wiederum einen magnetischen Fluss im zweiten beweglichen magnetischen Ringkern verursacht. Um diesen zweiten Ringkern wird auch mindestens eine Drahtschlaufe gelegt, an der man dann die Wechselspannung U1 für die Weiterverarbeitung abnehmen kann. In diesem Fall wird die Wandlung von elektrischer Energie in magnetischer Energie und zurück in elektrische Energie zweimal durchgeführt.

Die von der ortsfesten Schaltung 30 erzeugte Wechselspannung U30 wird als Trägersignal beispielsweise nach der bekannten Art von Frequency Shift Keying (FSK), Amplitude Shift Keying (ASK) oder Phase Shift Keying (PSK) oder auch in derer Kombination moduliert. Bei FSK liegt die Information in der Frequenz des Signals. Jedem Zustand den man übertragen möchte, weisst man eine bestimmte Frequenz zu. Bei ASK wird entsprechend die Grösse der Amplitude moduliert. Bei PSK wird der gewünschte Zustand über die Phasenlage des Trägersignals gesendet. Die ortsfeste Schaltung 30 weist dazu einen entsprechend ausgebildeten Modulator und einen Wechselstromgenerator 31 auf. Je nach Modulationsart kann an den Enden 1.3 und 1.4 der Zugstränge 1.2 des Riemens 1 die Frequenz, die Amplitude oder die Phase des Signals ausgelesen werden.

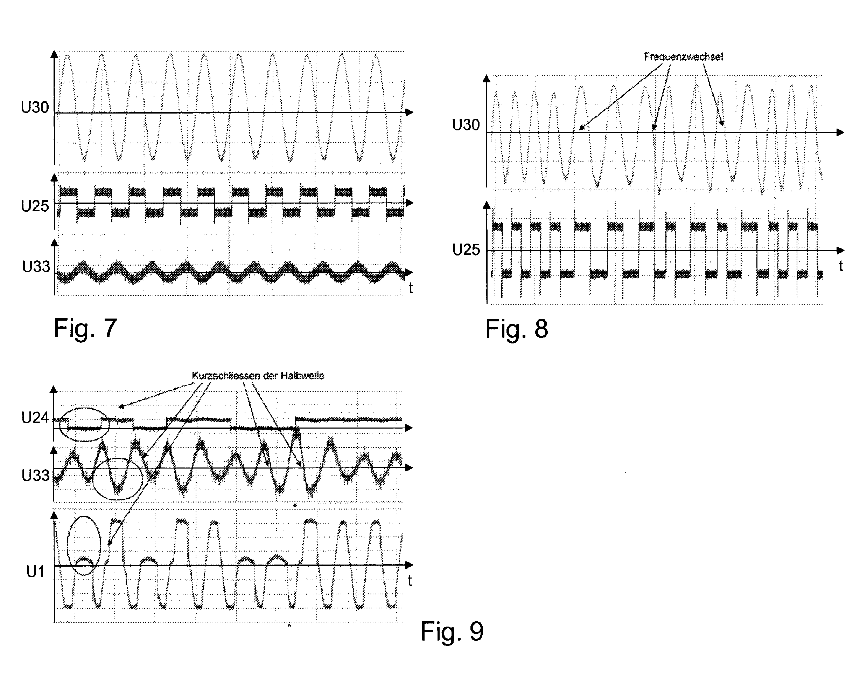

Figur 7 zeigt den zeitlichen Verlauf der Spannungen U30, U25 und U33 im Normalzustand ohne Kommunikation. Dabei ist die Spannung U25 die Spannung am Ausgang eines auf der beweglichen Schaltung 22 vorgesehenen Wellenbreitemessers 25. Der Wellenbreitemesser 25 liefert ein Rechtecksignal, das in vorteilhafter Weise weniger störungsanfällig ist. U30 ist die Ausgangsspannung der ortsfesten Schaltung 30 und die Spannung U33 ist die Spannung am Ausgang eines auf der ortsfesten Schaltung 30 vorgesehenen Energiemessers 33. Wie aus Figur 7 zu entnehmen ist, folgt die Spannung U25 des Wellenbreitemessers 25 auf der beweglichen Schaltung 22 dem Verlauf der Ausgangsspannung U30 der ortsfesten Schaltung 30.

Figur 8 zeigt den zeitlichen Verlauf der Spannungen U30 und U25, wenn ein Signal von der ortsfesten Schaltung 30 zur Schaltung 22 auf dem Schlitten 2 übertragen wird. Dabei ist zu erkennen, dass die Frequenzänderung bei der Ausgangsspannung U30 der ortsfesten Schaltung 30 zur selben Frequenzänderung bei der Spannung U25 auf der beweglichen Schaltung 22 führt.

Die Schaltung 22 auf dem Schlitten 2 ist so aufgebaut, dass die elektrische Last an den Enden 1.3 und 1.4 der Zugstränge 1.2 für genau bestimmte Zeiträume verändert werden kann. Dies kann beispielsweise durch zugeschaltete Widerstände, Kurzschliessen oder Unterbrechen der Spannung realisiert werden. In Figur 9 sind beispielhaft die zeitlichen Verläufe der Spannungen U33 und U30 in Abhängigkeit davon, ob der Kurzschluss-Schalter 24 offen oder geschlossen ist, grafisch dargestellt. Die dadurch zeitlich veränderte Energieaufnahme der Schaltung 22 auf dem Schlitten 2 wirkt sich über den Ringkern 40 bis zur ortsfesten Schaltung 30 aus und kann dort durch eine Energiemesseinrichtung 33 festgestellt und weiterverarbeitet werden. Wie aus Figur 9 zu entnehmen ist, verändert sich die Spannung U33 am Ausgang der Energiemesseinrichtung 33 abhängig davon, ob der Schalter 24 offen oder geschlossen ist. Der Schalter 24 dient dabei zur Signalübertragung von der beweglichen Schaltung auf die ortsfeste Schaltung.

Durch eine geeignete Ausführung der beiden Schaltungen 22 und 30 kann der Bruch von Zugsträngen 1.2 oder die unerwünschte Abnützung des Kunststoffmaterials des Riemens 1 - es entsteht dabei ein Kurzschluss mit den Riemenscheiben 4 und 5 - festgestellt werden.

Die an den Enden 1.3 und 1.4 anliegende Spannung U1 wird im Betrieb fortlaufend überprüft. Sinkt die Spannung U1 bei Strombelastung überdurchschnittlich ab, hat sich der Innenwiderstand des Riemens 1 vergrössert, was auf einen Bruch eines Zugstrangs hindeutet. Verschwindet die Spannung U1 ohne erhöhte Strombelastung ganz, weist das auf einen Kurzschluss zwischen den Zugsträngen 1.2 und den Riemenscheiben 4 und 5 hin. Somit lässt sich mit der beweglichen Schaltung 22 der Zustand des Riemens 1 ermitteln.

Die Linearachse mit den beiden Kabelgreifern 13 und 14 kann wie folgt betrieben werden. Befindet sich der Schlitten 2 in der rechten Endstellung, werden die Pneumatikzylinder 11 und 12 über den Druckluftanschluss 15 ausgefahren und dadurch die Kabelgreifer 13 und 14 geschlossen. Die Magnetventile 9 und 10 werden geschaltet, wodurch die Kabelgreifer 13 und 14 beim Wegfahren des Schlittens 2 geschlossen bleiben. Nach der Übergabe der ausgezogenen Kabel werden die Magnetventile 9 und 10 geschaltet und die Kabelgreifer 13 und 14 werden durch die Rückstellfedern in den Pneumatikzylindern 11 und 12 geöffnet. Der Druck in den Pneumatikzylindern 11 und 12 kann mit einem Druckschalter 8 überwacht werden. Die Stellungen der Pneumatikzylinder 11 und 12 können mit Positionsschaltern an den Zylindern detektiert werden.

Die bewegliche Schaltung 22 analysiert das Signal U25 mit zusätzlichen, in Fig. 4 nicht dargestellten Schaltungskomponenten und schaltet dann entsprechend die Magnetventile 9 und 10. Der Gleichrichter 23 dient als Stromquelle unter anderem für die bewegliche Schaltung 22 und die Magnetventile 9 und 10.

Die beschriebenen Ausführungsformen eignen sich sowohl zur Signalübertragung von der beweglichen Schaltung 22 zur ortsfesten Schaltung 30 als auch von der ortsfesten Schaltung 30 zur beweglichen Schaltung 22. Die Signalübertragung kann wahlweise unidirektional oder bidirektional erfolgen. Zudem kann mit den beschriebenen Ausführungsformen auch Energie von der ortsfesten Schaltung 30 zur beweglichen Schaltung 22 übertragen werden. Wenn hier von Energieübertragung die Rede ist, dann ist damit je nach Kontext die Signalübertragung und/oder die Energieübertragung im engeren Sinne gemeint.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen gemäß dem beiliegenden Ansprüchen möglich.

## Patentansprüche

1. Vorrichtung zum linearen Bewegen eines Schlittens,
- mit einem Riemen (1) mit mindestens einem elektrischen Leiter (1.2),
- mit einem beweglichen Schlitten (2) und einer mit dem Schlitten (2) beweglichen Schaltung (22), die mit dem Leiter (1.2) elektrisch verbunden ist,
- mit einer ortsfesten Schaltung (30), und
- mit einem Mittel zur induktiven Kopplung (40, 41), um von der ortsfesten Schaltung (30) elektrische Energie induktiv in den Leiter (1.2) einzukoppeln, **dadurch gekennzeichnet, dass** die Enden (1.3, 1.4) des Riemens (1) und/oder des Leiters (1.2) am Schlitten (2) festgeklemmt sind.

2. Vorrichtung nach Patentanspruch 1, bei der der Riemen (1) zumindest an den Enden (1.3, 1.4) Zähne (1.1) aufweist und bei der die Klemmung der Enden (1.3, 1.4) des Riemens durch einen Formschluss erreicht ist.

3. Vorrichtung nach Patentanspruch 1 oder 2, bei der der Riemen (1) Zugstränge (1.2) aufweist, die als elektrische Leiter (1.2) dienen, und bei der die Enden (1.3, 1.4) der Leiter (1.2) des Riemens (1) im Schlitten (2) direkt kontaktiert sind.

4. Vorrichtung nach Patentanspruch 3, mit auf dem Schlitten (2) angeordneten Kontaktelementen (19) mit denen die Enden (1.3, 1.4) des Leiters (1.2) elektrisch verbunden sind.

5. Vorrichtung nach Patentanspruch 3 oder 4, bei der im Schlitten die Leiter (1.2) auf Stiften (20) aufliegen und mit den Kontaktelementen (19) eingeklemmt sind, so dass die Leiter (1.2) mit den Kontaktelementen (19) elektrisch verbunden sind.

6. Vorrichtung nach einem der Patentansprüche 1 bis 5, bei der das Mittel zur induktiven Kopplung (40, 41) eine Wicklung (41) und einen magnetisch leitenden Ringkern (40) umfasst, durch den der Riemen (1) hindurch läuft.

7. Vorrichtung nach Patentanspruch 6,
bei der die ortsfeste Schaltung (30) einen Wechselstromgenerator (31) aufweist und derart ausgebildet und betreibbar ist, dass sie in der Wicklung (41) einen modulierten Wechselstrom (I30) erzeugt.

8. Vorrichtung nach einem der Patentansprüche 1 bis 7, bei der die ortsfeste Schaltung (30) derart ausgebildet und betreibbar ist, dass mit ihr die Leistung gemessen und ausgewertet wird.

9. Vorrichtung nach einem der Patentansprüche 1 bis 8, bei der am Schlitten (2) ein oder mehrere Kabelgreifer (13, 14) angeordnet sind.

10. Vorrichtung nach einem der Patentansprüche 1 bis 9, bei der ein Teil der elektrischen Leiter (1.2) Kupfer enthalten.

11. Vorrichtung nach einem der Patentansprüche 1 bis 10, mit einem weiteren Mittel zur induktiven Kopplung, das auf dem Schlitten (2) angeordnet ist.

12. Verwendung der Vorrichtung nach einem der Patentansprüche 1 bis 11,
zum Bearbeiten, insbesondere zum Einziehen und Strecken von Kabeln.

13. Verfahren zur Übertragung von Energie mit einer Vorrichtung nach einem der Patentansprüche 1 bis 11,
- bei dem mit der ortsfesten Schaltung (30) ein moduliertes Signal (U30) erzeugt wird,
- bei dem mit dem Mittel zur induktiven Kopplung (40, 41), das modulierte Signal (U30) in den Riemen (1) eingekoppelt wird, und
- bei dem mit der beweglichen Schaltung (22) das in den Riemen (1) eingekoppelte Signal (U1) vom Riemen (1) abgegriffen wird.

14. Verfahren nach Patentanspruch 13,
- bei dem mit der beweglichen Schaltung (22) die elektrische Last (24) verändert wird,
- bei dem mit dem Mittel zur induktiven Kopplung (40, 41) das durch die elektrische Last (24) veränderte Signal (U1) im Riemen (1) erfasst wird, und
- bei dem das erfasste Signal (U30) mit der ortsfesten Schaltung (30) ausgewertet wird.

15. Verfahren nach einem der Patentansprüche 13 bis 14, bei dem mit der ortsfesten Schaltung (30) der Zustand des Riemens (1) ermittelt wird.

## Claims

1. Apparatus for linearly moving a carriage,
- with a belt (1) with at least one electrical conductor (1.2),
- with a moveable carriage (2) and a circuit (22) which is moveable with the carriage (2) and which is electrically connected to the conductor (1.2),
- with a stationary circuit (30), and
- with an inductive coupling means (40, 41) in order to couple electrical energy inductively into the conductor (1.2) from the stationary circuit (30),
**characterized in that** the ends (1.3, 1.4) of the belt (1) and/or the conductor (1.2) are clamped fixedly on the carriage (2).

2. Apparatus according to Claim 1, in which the belt (1) has teeth (1.1) at least at the ends (1.3, 1.4), and in which the clamping of the ends (1.3, 1.4) of the belt is achieved by virtue of a form-fitting connection.

3. Apparatus according to Patent Claim 1 or 2, in which the belt (1) has pull cords (1.2), which act as electrical conductors (1.2), and in which the ends (1.3, 1.4) of the conductors (1.2) of the belt (1) are brought into direct contact with one another in the carriage (2).

4. Apparatus according to Patent Claim 3, with contact elements (19) arranged on the carriage (2), by means of which contact elements the ends (1.3, 1.4) of the conductor (1.2) are electrically connected.

5. Apparatus according to Patent Claim 3 or 4, in which the conductors (1.2) rest on pins (20) in the carriage and are clamped in by the contact elements (19), with the result that the conductors (1.2) are electrically connected to the contact elements (19).

6. Apparatus according to one of Patent Claims 1 to 5, in which the inductive coupling means (40, 41) comprises a winding (41) and a magnetically conducting toroidal core (40), through which the belt (1) passes.

7. Apparatus according to Patent Claim 6, in which the stationary circuit (30) has an AC generator (31) and is designed and can be operated in such a way that it generates a modulated alternating current (130) in the winding (41).

8. Apparatus according to one of Patent Claims 1 to 7, in which the stationary circuit (30) is formed and can be operated in such a way that it is used to measure and evaluate the power.

9. Apparatus according to one of Patent Claims 1 to 8, in which one or more cable grips (13, 14) are arranged on the carriage (2).

10. Apparatus according to one of Patent Claims 1 to 9, in which some of the electrical conductors (1.2) contain copper.

11. Apparatus according to one of Patent Claims 1 to 10, with a further inductive coupling means which is arranged on the carriage (2).

12. Use of the apparatus according to one of Patent Claims 1 to 11 for handling, in particular drawing in and stretching cables.

13. Method for transmitting energy with an apparatus according to one of Claims 1 to 11,
- in which a modulated signal (U30) is generated by the stationary circuit (30),
- in which the modulated signal (U30) is coupled into the belt (1) by the inductive coupling means (40, 41), and
- in which the signal (U1) which has been coupled into the belt (1) is tapped off from the belt (1) by the moveable circuit (22).

14. Method according to Patent Claim 13,
- in which the electrical load (24) is varied by the moveable circuit (22),
- in which the signal (U1) varied by the electrical load (24) is detected in the belt (1) by the inductive coupling means (40, 41), and
- in which the detected signal (U30) is evaluated by the stationary circuit (30).

15. Method according to one of Patent Claims 13 to 14, in which the state of the belt (1) is determined by the stationary circuit (30).

## Revendications

1. Dispositif de déplacement linéaire d'un coulisseau :
- avec une courroie (1) dotée d'au moins un conducteur électrique (1.2) ;
- avec un coulisseau mobile (2) et un circuit (22) pouvant se déplacer avec le coulisseau (2) et relié sur le plan électrique au conducteur (1.2) ;
- avec un circuit (30) fixe ; et
- avec un moyen de couplage inductif (40, 41 permettant de coupler, à partir du circuit (30) fixe, l'énergie électrique de façon inductive dans le conducteur (1.2);
**caractérisé en ce que** les extrémités (1.3, 1.4) de la courroie (1) et/ou du conducteur (1.2) peuvent être coincées fixement au coulisseau (2).

2. Dispositif selon la revendication 1, dans lequel la courroie (1) présente des dents (1.1) au moins au niveau des extrémités (1.3, 1.4) et dans lequel le coincement des extrémités (1.3, 1.4) de la courroie est réalisé par complémentarité de formes.

3. Dispositif selon la revendication 1 ou 2, dans lequel la courroie (1) comporte des chaînes de traction (1.2) servant de conducteur électrique (1.2) et dans lequel les extrémités (1.3, 1.4) des conducteurs (1.2) de la courroie (1) sont directement mises en contact dans le coulisseau (2).

4. Dispositif selon la revendication 3, avec des éléments de contact (19) disposés sur le coulisseau (2) avec lesquels les extrémités (1.3, 1.4) du conducteur (1.2) sont reliées sur le plan électrique.

5. Dispositif selon la revendication 3 ou 4, dans lequel les conducteurs (1.2) reposent sur des pointes (20) dans le coulisseau et sont coincés avec les éléments de contact (19) de façon à relier les conducteurs (1.2) sur le plan électrique aux éléments de contact (19).

6. Dispositif selon l'une quelconque des revendications 1 à 5, dans lequel le moyen de couplage inductif (40, 41) comprend un enroulement (41) et un noyau annulaire (40) conducteur sur le plan magnétique à travers lequel la courroie (1) passe.

7. Dispositif selon la revendication 6, dans lequel le circuit (30) fixe comporte un générateur de courant alternatif (31) et est réalisé et peut être entraîné de façon à produire un courant alternatif modulé (130) dans l'enroulement (41).

8. Dispositif selon l'une quelconque des revendications 1 à 7, dans lequel le circuit (30) fixe est réalisé et peut être entraîné de façon à mesurer et évaluer la puissance.

9. Dispositif selon l'une quelconque des revendications 1 à 8, dans lequel un ou plusieurs serre-câbles (13, 14) sont disposés au niveau du coulisseau (2).

10. Dispositif selon l'une quelconque des revendications 1 à 9, dans lequel une partie des conducteurs électriques (1.2) convient du cuivre.

11. Dispositif selon l'une quelconque des revendications 1 à 10, avec un moyen de couplage inductif supplémentaire disposé sur le coulisseau (2).

12. Utilisation du dispositif selon l'une quelconque des revendications 1 à 11, permettant de manipuler, notamment de passer et d'étirer des câbles.

13. Procédé de transmission d'énergie à l'aide d'un dispositif selon l'une quelconque des revendications 1 à 11, dans lequel :
- un signal modulé (U30) est produit à l'aide du circuit (30) fixe ;
- le signal modulé (U30) est couple dans la courroie (1) à l'aide du moyen de couplage inductif (40, 41) ; et
- la tension du signal (U1) couplé dans la courroie (1) est prise par la courroie (1) à l'aide du circuit (22) mobile.

14. Procédé selon la revendication 13, dans lequel :
- la charge électrique (24) est modifiée par le biais du circuit (22) mobile ;
- le signal (UI) modifié par la charge électrique (24) est détecté dans la courroie (1) à l'aide du moyen de couplage inductif (40, 41) ; et
- le signal (U30) détecté est analysé à l'aide du circuit (30) fixe.

15. Procédé selon l'une quelconque des revendications 13 à 14, dans lequel l'état de la courroie (1) est déterminé à l'aide du circuit (30) fixe.
